# DEMANDE DE BREVET EUROPEEN

(11) **EP 2 963 000 A1**
(43) Date de publication de la demande: **06.01.2016**
(21) Numéro de dépôt: 15306079.3
(22) Date de dépôt: 02.07.2015
(51) Int. Cl.: C04B 26/26, E01C 7/18, C08L 95/00, C04B 26/02

(54) **COMPOSITION DE GRAVE AGGLOMÉRÉE SCELLÉE POUR COUCHE D'ASSISE COMPRENANT UNE FORTE PROPORTION EN GROS GRANULATS**

(30) Priorité: 03.07.2014 FR 1456401
(71) Demandeur: COLAS, 92100 Boulogne-Billancourt (FR)
(72) Inventeur: HAUZA, PHILIPPE, 28500 Mézières en Drouais (FR)
(74) Mandataire: Coralis Harle

(57) **Abrégé**

La présente invention concerne une composition de Grave Agglomérée Scellée (GAS) comprenant au moins un liant hydrocarboné et un mélange granulaire, ledit mélange granulaire présentant la distribution granulométrique suivante, en masse, par rapport à la masse totale du mélange granulaire : de 45 à 90% du mélange granulaire présentent une dimension supérieure ou égale à 10 mm, avec au moins 25% qui présentent une dimension supérieure ou égale à 20 mm, caractérisée en ce que la teneur en vide en volume par rapport au volume total de la composition GAS mesurée selon la norme NF EN 12697 à 120 girations à la presse à cisaillement giratoire (PCG), est inférieure ou égale à 10%, de préférence va de 2 à 9% et idéalement va de 4 à 8%.

La présente invention concerne également un revêtement routier comprenant ladite composition GAS.

## Description

### DOMAINE TECHNIQUE AUQUEL SE RAPPORTE L'INVENTION

La présente invention se rapporte au domaine des revêtements routiers.

En particulier, la présente invention concerne une composition de Grave Agglomérée Scellée (GAS) comprenant au moins un liant hydrocarboné et un mélange granulaire à base de granulats, le mélange granulaire comportant une forte proportion en éléments grenus, à savoir présentant une dimension supérieure à 20 mm, voire supérieure à 31,5 mm.

L'invention a également trait à un revêtement routier structurellement positionné en tant que couche d'assise.

### ARRIERE-PLAN TECHNOLOGIQUE

Les chaussées routières en enrobés sont composées d'une superposition de plusieurs couches sur le sol support à revêtir : une couche de forme revêtue d'une couche d'assise elle-même revêtue d'une couche de surface. La couche d'assise est classiquement une bicouche composée d'une couche de base et d'une couche de fondation. La couche de surface peut être de même une bicouche composée d'une couche de liaison et d'une couche de roulement ou elle peut être formée d'une monocouche (couche de roulement seule).

En particulier, les couches de fondation et de base formant la couche d'assise doivent assurer les fonctions suivantes : lors de la construction de la chaussée, elles doivent restituer aux couches de surface un support portant, homogène et bien réglé. Elles peuvent occasionnellement servir de couche de roulement provisoire pendant la construction de la chaussée. Enfin, elles assurent la protection thermique de la plateforme sous-jacente et apportent à la chaussée sa résistance mécanique aux charges verticales induites par le trafic.

La couche d'assise bitumineuse est généralement constituée en Grave Bitume (GB) ou en Enrobés à Module Elevé (EME).

Les GB sont habituellement composées d'un mélange de bitume et d'agrégats concassés dont la granulométrie est le plus souvent continue. Actuellement, les granularités utilisées sont de type 0/10 à 0/14 mm, plus rarement 0/20 mm. Les teneurs en bitume de ces produits dépassent systématiquement 4% (masse de bitume par rapport à la masse des granulats exprimée en pourcentage) pour atteindre 5% pour les GB les plus performantes. Les grades de bitume usuellement employés sont 35/50 ou 20/30.

En couche de base ou en couche de fondation, les GB s'appliquent dans une fourchette d'épaisseurs comprise entre 6 et 15 cm. En général, les structures de chaussées construites avec des Graves Bitume en couche d'assises présentent une épaisseur totale comprise entre 8 et 30 cm en fonction du niveau de trafic pour lequel la chaussée sera dimensionnée.

L'EME comprend un mélange d'agrégats concassés de même granulométrie que celui composant les GB (diamètre ou dimension limité(e) à 20 mm ou mieux à 14 mm) avec un bitume plus dur que celui utilisé pour les GB (grade 10/20 ou 15/25 pour EME2, 20/30 pour EME1). Le cas échéant, un grade 35/50 y est accepté, mais dans ce cas, ce dernier est généralement additivé (ex : déchets de câbles).

En outre, la teneur en liant des EME est plus élevée que dans les GB (entre 5,2 et 6% en masse par rapport à la masse totale de l'EME). Les formulations EME présentent ainsi un module de rigidité important et une résistance supérieure en fatigue et à l'orniérage que les GB.

Les EME permettent ainsi de former une couche de base ou une couche de fondation d'épaisseur plus mince que celle formée avec des GB (de l'ordre de 6 à 15 cm en fonction des hypothèses de trafic) tout en présentant : une bonne tenue à la fatigue, une bonne résistance à l'orniérage, et tout en permettant une réduction des travaux annexes (ex.: passage de canalisation, limite de la hauteur de rehausse des rails de sécurité, des ouvrages en bordure, etc.).

L'évolution des formulations des couches d'assise tend ainsi vers l'utilisation de compositions comprenant des teneurs en bitumes de plus en plus élevées (4 à 5% en masse par rapport à la masse totale des GB et 5,2 à 6% en masse par rapport à la masse totale d'EME) avec des bitumes présentant une plus grande dureté (35/50 à 20/30 pour les GB et 15/25 à 10/20 pour les EME) et parfois additivées afin d'améliorer les performances mécaniques des formulations. Le squelette granulaire fait inversement état d'une granularité maximale qui tend à diminuer (de 20 mm à 14 mm, voire 10 mm). Les formulations actuelles présentent en outre un module de rigidité de plus en plus grand.

On connaît également de l'état de la technique le document EP0 381 903 qui décrit un enrobé poreux (peu compact) destiné à la construction de couche d'assise de chaussée. L'enrobé de ce document est dit « poreux » ou encore « ouvert » car il comporte un volume de vide important de l'ordre de 20 à 50%.

Cet enrobé poreux comprend notamment un mélange granulaire composé de granulats de gros calibre et d'un liant hydrocarboné bitumineux qui peut être dopé. En particulier, le mélange granulaire comprend en masse, par rapport à sa masse totale : de 85 à 100% de granulats présentant une classe granulométrique d/D de 6/60 mm, de 0 à 10% de sables de diamètre d/D de 0/6 mm, et de 0 à 5 % de fines dont la granularité est inférieure à 80 µm. Les enrobés exemplifiés comprennent en masse 76% ou 88% de granulats ayant une dimension de 20/40 mm pour un volume de vide respectivement de 35% et 20%.

De nombreux avantages de cet enrobé poreux sont mentionnés dans ce document («absorption d'une partie importante des bruits, augmentation de l'adhérence des véhicules... »). Cependant aucun de ces avantages n'est étayé par des essais techniques concrets. Aucune grandeur mécanique, telle que la résistance à la fatigue, le module de rigidité, n'a par exemple été déterminée. En outre, cet enseignement de 1989 n'a jamais été normalisé dans l'état de la technologie routière en France.

Le document WO 2013/093046 décrit une composition d'enrobé auto-plaçant ouvert ou poreux (peu compact) comprenant des fractions solides minérales enrobées à l'aide d'un liant bitumineux modifié par adjonction de polymères et de dopes d'adhésivité et comprenant des fibres minérales et/ou des fibres de synthèse. Le pourcentage en vide (stockage d'eau et d'air dans l'enrobé ouvert) après mise en oeuvre et refroidissement de cet enrobé est compris entre 15 et 50%, avantageusement entre 25 et 50% et plus avantageusement entre 25 et 40%.

En particulier, les fractions solides minérales comprennent des fines (granularité ≤0,063 mm), du sable concassé et/ou semi-concassé (de granularité entre 0,0063 et 2 mm ou de granularité entre 0,0063 et 4 mm), des gravillons (de granularité entre 14 et 50 mm), et des agrégats d'enrobés (AE).

Dans la partie expérimentale, les enrobés exemplifiés comprennent en masse : 80% ou 83% de granulats présentant une dimension de 20/40 mm et 11,5% de sables 0/4mm pour 3,4% de bitume.

De même pour cet enseignement, la résistance à la fatigue ainsi que le module de rigidité n'ont pas été mesurés.

Bien que les formulations de couche d'assise selon l'art antérieur soient satisfaisantes, il existe toujours un besoin pour de nouvelles formulations présentant de bonnes performances mécaniques, notamment en fatigue. En particulier, il existe un besoin de fournir des formulations de couche d'assise présentant une excellente durabilité, une bonne résistance au poinçonnement statique et une bonne compacité, tout en étant économique.

Le but de la présente invention est ainsi de proposer un nouveau produit : une composition de Grave Agglomérée Scellée (GAS), en particulier compact (non ouvert ou non poreux) pour couche d'assise répondant, au moins en partie, aux critères susmentionnés et présentant notamment des performances au moins égales à celles des formulations GB ou structurellement comparables à celles des EME décrites ci-dessus.

### OBJET DE L'INVENTION

A cet effet, la présente invention a pour objet une composition GAS pour couche d'assise comprenant au moins un liant hydrocarboné et un mélange granulaire à base de granulats (tels que des fines, sables, gravillons, graviers, agrégats d'enrobés, ballasts), ledit mélange granulaire présentant la distribution granulométrique suivante, en masse, par rapport à la masse totale du mélange granulaire:
- de 45 à 90%, de préférence de 50 à 70% dudit mélange granulaire présentent une dimension (taille) supérieure ou égale à 10 mm,
   o avec au moins 25%, de préférence au moins 30% et idéalement au moins 33%, typiquement de 35 à 50%, qui présentent une dimension supérieure ou égale à 20 mm (le complément étant des granulats de granularité 10/20 mm),
caractérisée en ce que la teneur en vide, en volume, par rapport au volume total de la composition GAS mesurée selon la norme NF EN 12697 à 120 girations à la presse à cisaillement giratoire (PCG), est inférieure ou égale à 10%, de préférence est inférieure ou égale à 8%, voire inférieure ou égale à 6%.

La Demanderesse a découvert, de manière surprenante, qu'une forte proportion en éléments très grenus de dimension supérieure ou égale à 10 mm, voire à 20 mm, permet d'obtenir une couche d'assise très peu poreuse présentant d'excellentes performances mécaniques, au moins équivalentes à celles d'une GB de classe 4, ne nécessitant en outre à la mise en oeuvre, l'application qu'une couche unique de la composition GAS selon l'invention afin de former ladite couche d'assise.

L'emploi d'un grand nombre d'éléments très grenus permet, de plus, de contrôler le cheminement des fissures de fatigue formées au cours du temps rendant le produit aussi robuste, tout en étant plus économique que les GB et EME utilisés à ce jour.

En outre, la composition GAS selon l'invention présente une excellente compacité (teneur en vide ≤ 10%) qui lui permet ainsi de rivaliser sur ce critère avec les EME. Elle assure ainsi un excellent niveau d'imperméabilisation vis-à-vis du sol support.

L'invention a également trait à un revêtement routier comprenant la composition GAS susmentionnée. En particulier, le revêtement ainsi formé est une monocouche d'assise présentant une épaisseur de 8 à 20 cm formant à la fois la couche de base et la couche de fondation d'une couche d'assise classique. Cette caractéristique permet ainsi l'économie d'une application d'une des deux couches formant usuellement une couche d'assise, voire également celle d'une couche d'accrochage.

La composition GAS selon l'invention permet ainsi, de par ses caractéristiques, d'assurer une excellente compacité pour une très large gamme d'épaisseurs de 8 à 20 cm et ce, en une seule couche.

La composition GAS selon l'invention va ainsi à l'encontre de l'évolution des formulations de couche d'assise utilisées à ce jour. Elle présente, contrairement à ce qu'un homme du métier aurait pu attendre par l'emploi d'une forte proportion en granulats de dimension supérieure à 10 mm et supérieure à 20 mm, une excellente souplesse, la rendant facile à mettre en oeuvre, dans une gamme d'épaisseur couvrant l'ensemble des besoins habituels et même au-delà, tout en présentant une bonne résistance mécanique et notamment une résistance au poinçonnement améliorée comparée à celle des mélanges bitumineux classiques.

D'autres caractéristiques non limitatives et avantageuses du GAS conforme à l'invention, prises individuellement ou selon toutes les combinaisons techniquement possibles, seront décrites ci-après.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est un graphique représentant la droite de fatigue obtenue sur une composition de GAS via l'essai ITFT (fatigue en compression diamétrale : microdéformation initiale en µdéf₀ de 12 carottages d'enrobé selon l'invention en fonction du nombre de cycle avant rupture N_{f}),
- les figures 2 à 5 montrent une section de carotte suite à un essai de fatigue par traction indirecte après rupture : la figure 2 est un exemple comparatif tandis que les figures 3 à 4 représentent des carottes d'enrobé selon l'invention ;
- la figure 6 est un graphique montrant l'influence de la granulométrie des granulats en fonction du nombre de cycles de rupture.

Pour le reste de la description, à moins qu'il n'en soit spécifié autrement, l'indication d'un intervalle de valeurs « de X à Y » ou « entre X et Y », dans la présente invention, s'entend comme incluant les valeurs X et Y.

Egalement dans le cadre de l'invention, la « dimension » ou « taille » d'un granulat compris dans le mélange granulaire correspond à son diamètre si ce granulat est de forme sphérique, comme le sable. Si le granulat n'a pas une forme sphérique, sa dimension correspond à la longueur de son axe primaire, c'est-à-dire la plus longue ligne droite qui peut être dessinée entre une extrémité de ce granulat et une extrémité opposée. Les caractéristiques géométriques des granulats sont notamment mesurées selon la norme NF EN 933-1.

Selon l'invention, une classe granulaire, notée d/D avec d<D, désigne un intervalle de dimensions de particules en termes de dimension inférieure (d) et supérieure (D) de tamis, exprimées en mm et contient ainsi des grains dont la dimension varie de d à D ; une classe granulaire, notée 0/d' avec 0<d', désigne un intervalle de dimensions de particules en termes de dimension inférieure (0) et supérieure (d') de tamis, exprimées en mm et contient ainsi des grains dont la dimension varie de 0 à d'.

Selon l'invention, le mélange granulaire est composé en général de granulats naturels, artificiels ou recyclés répondant notamment aux normes NF EN 13043 et NF P 18-545.

Le terme « granulat naturel » désigne un granulat n'ayant subi aucune déformation autre que mécanique (réduction par concassage). Le terme « granulat artificiel » désigne un granulat résultant d'un procédé industriel comprenant des transformations thermiques ou autres.

Le terme « granulat recyclé » désigne un granulat provenant de produits de démolition de chaussée ou encore de ballast neuf ou usagé de la SNCF (Société Nationale des Chemins de Fer français) ou de la RATP (Régie Autonome des Transports Parisiens), à savoir le lit de pierres ou de graviers sur lequel repose une voie de chemin de fer. Il peut également s'agir de granulats de béton concassé, c'est-à-dire issus de la réduction par concassage-criblage de bétons issus de la déconstruction d'ouvrages en béton (chaussée, bâtiments, ouvrages d'art). Un produit de démolition de chaussée, encore appelé « agrégats d'enrobés » (AE), désigne un granulat provenant de produits de démolition (comme des enrobés d'anciennes chaussées qui ont été concassés et/ou fraisés). Les autres granulats utilisés peuvent être des granulats routiers, répondant aux normes : NF EN 13043 en Europe et ASTM C33 aux Etats-Unis d'Amérique.

De préférence, le mélange granulaire comprend des granulats recyclés.

La société Demanderesse s'est attachée au développement de nouvelles formulations pour couche d'assise adaptées aux exigences des professionnels de la route, à savoir présentant une grande durabilité, des résistances mécaniques élevées tout en étant économiques (matières premières peu onéreuses combinées à une teneur en liant relativement basse).

Tel qu'indiqué précédemment, la présente invention porte sur une composition GAS comprenant au moins un liant hydrocarboné et un mélange granulaire à base de granulats pouvant être choisis parmi : des fines, sables, gravillons, graviers, agrégats d'enrobés (AE), des ballasts ou un de leurs mélanges.

La composition GAS selon l'invention est en particulier d'une part caractérisée par une teneur en vide, en volume, par rapport au volume total de la composition GAS, mesurée selon la norme NF EN 12697 à 120 girations à la presse à cisaillement giratoire (PCG) qui est inférieure ou égale à 10%, de préférence inférieure ou égale à 8% ou typiquement inférieure ou égale à 6%. Par exemple, la teneur en vide peut aller de 2 à 9% et idéalement de 4 à 8%.

Du fait de la forte granularité de la composition GAS, il a été constaté lors des essais expérimentaux d'importants effets de bord en périphérie des éprouvettes. Ces effets de bord pénalisent le résultat des essais par rapport à la réalité pouvant être observée *in situ.* Les fourchettes de % de vides à 120 girations définies ci-avant tiennent compte de cet aléa.

La composition GAS selon l'invention est ainsi dans les faits très compacte (sa compacité oscille entre 92 et 98%, en volume, par rapport au volume total de la composition GAS après compactage). Pour les GB usuelles, cette même compacité oscille entre 89 et 95%. L'excellente compacité de la composition GAS selon l'invention assure ainsi une meilleure imperméabilisation vis-à-vis du sol support que la GB et par conséquent est idéale pour la confection de couches d'assise.

La composition GAS selon l'invention est d'autre part caractérisée en ce que ledit mélange granulaire présente la distribution granulométrique suivante en masse par rapport à la masse totale dudit mélange granulaire :
- de 45 à 90%, de préférence de 50 à 70% du mélange granulaire présentent une dimension supérieure ou égale à 10 mm, avec au moins 25%, de préférence au moins 30% et idéalement au moins 33%, et en particulier de 35 à 50% qui présentent une dimension supérieure ou égale à 20 mm ; et donc
- de 10 à 55%, de préférence de 30 à 50% du mélange granulaire présentent une dimension inférieure à 10 mm.

Au sens de l'invention, une quantité d'au moins 25% en masse du mélange granulaire présentant une dimension supérieure ou égale à 20 mm inclut les pourcentages suivants : 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60 et suivants, et typiquement les pourcentages suivants : 25, 26, 27, 28, 29, 30, 31, 32, 33, 34, 35, 36, 37, 38, 39, 40, 41, 42, 43, 44, 45, 46, 47, 48, 49 et 50 et tout intervalle compris entre deux de ces valeurs.

Ainsi, le mélange granulaire selon l'invention comprend une première fraction granulaire grenue nommée d/D où d est supérieur ou égal à 10 mm. Généralement, la dimension maximale D présente une dimension inférieure ou égale à 50 mm, de préférence inférieure ou égale à 40 mm, voire inférieure ou égale à 31,5 mm.

A titre de comparaison, dans des formulations usuelles GB ou EME, les granularités utilisées sont 0/10, 0/14 à 0/20mm. Pour ces enrobés GB ou EME, la fraction 20/D n'excède pas 10 à 15% au maximum, en masse, par rapport à la masse totale de GB ou EME. Or, dans la composition GAS selon l'invention, ce pourcentage, exprimé également en masse par rapport à la masse totale de la composition GAS, est porté au-delà de 25%, en particulier de 30% et peut aller jusqu'à 50%.

Comme cela sera démontré dans les essais expérimentaux, l'emploi d'une forte teneur en éléments très grenus permet d'améliorer les performances mécaniques de la composition GAS en contrôlant et en retardant notamment la remontée des fissures lors de la durée de vie de la chaussée d'assise.

De manière inattendue, l'emploi d'une forte proportion de granulats grenus ne s'oppose pas à l'obtention d'excellentes compacités dans la composition GAS (teneur en vide ≤10% selon la norme NF EN 12697).

Les fractions employables pour cette première fraction granulaire sont par exemple les fractions de granulométrie 10/20 mm, 10/14mm, 20/40, etc ou un de leurs mélanges.

En particulier, les granulats de la première fraction granulaire grenue d/D peuvent être, sans limitation des granulats choisis parmi : les graviers, les gravillons, les sables, les agrégats d'enrobés (AE) ou des ballasts SNCF ou un de leurs mélanges.

Ces granulats, codifiés selon NF P18 545, intègrent en particulier les caractéristiques intrinsèques parmi les codes B et C du paragraphe 7 de la norme.

En particulier, le mélange granulaire présentant une dimension supérieure ou égale à 10 mm, voire supérieure à 20 mm présente, de façon préférée, une forme cubique. Il présente notamment un coefficient d'aplatissement faible de l'ordre de 0 à 20%, de préférence inférieur ou égal à 15% mesuré selon la norme NF EN 933-3/A1 sur les grilles à fentes 16, 20, 25 et 31,5 mm.

Au sens de l'invention, un coefficient d'aplatissement allant de 0 à 20% inclut les valeurs suivantes ou tout intervalle s'y trouvant à l'intérieur : 20%, 19%, 18%, 17%, 16%, 15%, 14%, 13%, 12%, 11 %, 10%, 9%, 8%, 7%, 6%, 5%, 4%, 3%, 2%, 1% et suivantes.

La Demanderesse a découvert de manière surprenante que l'introduction de granulats « plats » dans le mélange favoriserait la fragilité de l'édifice granulaire vis-à-vis des remontées de fissures au sein de la mosaïque de la composition GAS et qu'au contraire, l'introduction de granulats présentant un coefficient d'aplatissement faible permettrait de faciliter et d'accroître la compacité de la composition GAS et du revêtement obtenu, ainsi que sa résistance en fatigue.

Par exemple, les ballasts 20/32 ou 20/40 mm de la SNCF conviennent pour former les granulats de granularité 20/D selon l'invention. Ils sont répartis en 3 classes dénommées IB, II et III en fonction de caractéristiques géométriques et physiques.

En général, le ballast naturel de voies ferrées provient du concassage de roches naturelles extraites des bancs sains de carrières de pierres dures, à l'exclusion de tous bancs peu consistants et en éliminant toutes gangues et croûtes de carrière, débris terreux et organiques, sables et autres matières étrangères. Il ne peut contenir d'éléments dont la nature, la dimension ou la teneur, sont susceptibles de le rendre impropre à l'usage et à la durabilité qu'on en attend. La granulométrie du ballast d/D avec d ≥ 20mm, vérifiée par lavage sur les tamis de contrôle normalisés, suivant les normes NF EN 933-1/A1 et NF P18 545, est définie comme suit :

| | |
|---|---|
| % de passant à d (10 mm) | ≤ 15 % |
| % de passant à D (40 mm) | ≥ 85 % |
| % de passant à 1,4 * D | ≥ 95 % |
| % de passant à 2 * D | 100% |
| % de fines (≤0,063 mm) | ≤ 3% |
| Propreté des fines | MBf ≤ 10 |

La valeur de son coefficient d'aplatissement, mesurée sur les grilles à fentes 10 mm, 12,5 mm, 16 mm et 20 mm suivant la norme NF EN 933-3/A1, ne peut être supérieure à : 15 pour le ballast 20/32 de type IB ; 20 pour le ballast 20/32 de type II et III.

La composition GAS selon l'invention présente ainsi l'avantage de permettre le recyclage d'agrégats non conventionnels (subnormaux) qui sont en outre moins onéreux que les agrégats conventionnels.

Selon une caractéristique de l'invention, au moins une partie du mélange granulaire présentant une dimension supérieure ou égale à 10 mm, de préférence supérieure ou égale à 20 mm (à savoir de la première fraction granulaire grenue d/D) sont des granulats recyclés, tels que des ballasts de la SNCF ou encore du béton concassé recyclé.

De préférence, le mélange granulaire est également caractérisé en ce qu'il comprend moins de 25% (borne comprise), de préférence de 6 à 15%, de manière encore plus préférée de 8 à 15%, en masse, par rapport à la masse totale du mélange granulaire, d'une seconde fraction granulaire, dite fraction sable (0/d') composée de granulats présentant une dimension inférieure ou égale à 4 mm (0/4), de préférence inférieure ou égale à 2 mm (0/2). En général, les GB et les EME usuels titrent plus entre 30% et 45% en masse de fraction 0/2 ou 0/4mm.

Cette fraction sableuse contribue à la maniabilité du produit en se mélangeant au liant hydrocarboné. Sa quantité optimisée permet de combler dans le produit fini la très grande partie des interstices entre les éléments les plus grenus, sans provoquer leur écartement relatif. Selon l'invention, la teneur en sable est possiblement d'autant plus réduite que la teneur en agrégats d'enrobés (AE) recyclés est importante dans le mélange final.

Les granulats de la fraction sableuse peuvent être, sans limitation : des sables, des fillers, des sablons (sables à grains très fins), des poussières, des agrégats d'enrobé ou un de leurs mélanges.

Les fillers, également appelés fines, correspondent à une poudre minérale présentant généralement une granulométrie inférieure à 63 µm, tandis que les sables correspondent généralement à toute roche à l'état de petits grains non liés présentant une dimension allant jusqu'à 4 mm.

Selon une autre caractéristique de l'invention, le mélange granulaire présentant une dimension inférieure ou égale à 10 mm comprend de 0 à 50% (comme de 10 à 50%), de préférence 0 à 40% en masse, par rapport à la masse totale de cette fraction, d'agrégats d'enrobés (AE), le complément étant du sable de diamètre moyen 0/2 mm ou 0/4 mm, des graviers/gravillons de dimension 0/10 mm ou un de leurs mélanges.

En général, le mélange granulaire comprend de 20 à 35%, en masse, par rapport à la masse totale du mélange granulaire d'agrégats d'enrobés (AE). L'enrobé selon l'invention permet ainsi de valoriser des agrégats issus d'anciennes chaussées, ce qui lui confère un caractère plus économique et plus respectueux de l'environnement.

Selon une variante de réalisation, la composition du mélange granulaire est discontinue, voire doublement discontinue. Cette caractéristique permet de déférer dans la matrice grossière de gravillons présentant une dimension moyenne ≥ 20mm, d'autres fractions de plus petites dimensions, destinées à optimiser l'arrangement granulaire sans provoquer d'éloignement relatif des gros éléments pendant l'opération de compactage et ainsi minimiser le pourcentage de vides.

Selon une autre variante, le mélange granulaire comprend éventuellement, en masse, par rapport à la masse totale du mélange granulaire, de 0 à 30%, de préférence de 0 à 20%, voire de 0 à 18% et idéalement de 8 à 15% d'une troisième fraction granulaire, dite fraction intermédiaire (d'/D'), présentant une dimension de 4 (non inclus) à 10 mm (4/10) (10 non inclus).

Les fractions intermédiaires employables sont par exemple les fractions de granulométrie 6/10, 4/10, 2/10 ou un de leurs mélanges.

Les granulats de la fraction intermédiaire selon l'invention présentent de préférence une masse volumique réelle mesurée selon la norme NF EN 1097-6 supérieure à 2000 kg/m³ et même supérieure à 2500kg/m³. Par exemple, la fraction granulaire intermédiaire d'/D' pourra présenter une granulométrie choisie parmi 4/6,3 ; 6,3/10 ; 10/14 ; 14/20 ou 10/20mm ou un de leurs mélanges. Ces classes granulaires s'entendent au sens de la norme NF P18-545.

Cette fraction intermédiaire (d'/D') présente notamment l'avantage de permettre aux plus gros éléments du squelette minéral de la composition GAS de mieux se mettre en place lors de son compactage (effet roulement à bille) et d'assurer par la suite un blocage de l'édifice granulaire final.

A titre d'exemple, l'enrobé selon l'invention peut comprendre le mélange granulaire suivant, en poids, par rapport au poids total du mélange granulaire :
- de 20 à 55%, de préférence de 25 à 50% et idéalement 35 à 40% de granulats présentant une dimension supérieure ou égale à 20 mm, de préférence allant de 20 à 40 mm ;
- de 15 à 45%, de préférence de 20 à 35% et idéalement 25% de granulats naturels (gravillons, etc) présentant une dimension allant de 10 à 20 mm (non inclus) ;
- de 20 à 40%, de préférence de 20 à 35% et idéalement 30% d'agrégats d'enrobé de dimension inférieure à 10mm ;
- de 5 à 25%, de préférence de 8 à 15% et idéalement 10% de sables présentant une dimension allant de 0 à 4 mm, et en général moins de 15% de sables présentant un diamètre allant de 0 à 2 mm.

Dans le cadre de la présente invention, le liant hydrocarboné est choisi parmi : un liant bitumineux, végétal ou aqua-liant ou un de leurs mélanges. En particulier, le liant représente de préférence, en masse, par rapport à la masse totale de l'enrobé, moins de 4,5% (borne incluse), de préférence de 3 à 4% et idéalement de 3 à 3,7%.

Ainsi, la composition GAS selon l'invention présente l'avantage d'utiliser une teneur en liant hydrocarboné bien plus faible que les teneurs habituellement employées pour préparer les GB ou les EME. En effet, par exemple, la teneur en poids du liant hydrocarboné au sein de l'enrobé peut être de l'ordre de 3 à 3,7% alors que pour les GB, elle est de 4 à 5% et de 5,2 à 6% pour les EME. La Grave Agglomérée Scellée (composition GAS) selon l'invention est plus économique que les produits existants sur le marché, tout en présentant des performances mécaniques au moins comparables aux GB et à certains EME.

Selon l'invention, on entend par « liant hydrocarboné » un composé susceptible de durcir et/ou de lier entre eux des matériaux granulaires. Le bitume est un mélange de matières hydrocarbonées naturelles issues de la fraction lourde obtenue lors de la distillation du pétrole, ou provenant de gisements naturels se présentant sous forme solide ou liquide, de densité généralement comprise entre 0,8 et 1,2. Il peut être préparé par toute technique conventionnelle.

Sont admis comme bitume au sens de l'invention les bitumes purs définis dans la norme NF EN 12591.

Le bitume peut également être un bitume modifié défini dans la norme NF EN 14023. Par exemple, les bitumes sont modifiés par incorporation d'additifs de toute nature, tels que des additifs en vue d'améliorer les caractéristiques d'adhésivité, de tenue aux températures extrêmes (hautes et basses) ou la tenue mécanique sous trafic élevé ou agressif. On peut citer les bitumes améliorés par incorporation d'élastomères ou de plastomères synthétiques ou naturels de type poudre de caoutchouc (polybutadiène, caoutchouc styrène-butadiène ou SBR), SBS, EVA ou autres. Il est également possible d'utiliser des mélanges de bitumes de différents types.

En général, le liant hydrocarboné selon l'invention n'est pas modifié par incorporation d'additifs (dopes, fibres minérales ou synthétiques).

Le bitume pourra notamment être choisi parmi les bitumes présentant un grade de pénétrabilité à 25°C déterminé selon la norme EN 1426 de 10/20, 15/25, 20/30, 40/60, 35/50, 50/70, 70/100 1/10^{e} de mm ou d'un de leurs mélanges.

Sont également admis comme « liant hydrocarboné » au sens de l'invention les liants d'origine végétale, tel que le Végécol®, commercialisé par la société Colas et décrit dans la demande de brevet FR 2 853 647, les liants de synthèse d'origine pétrolière tels que la gamme des liants Bituclair® commercialisée par la société Colas ou encore un « aqua-liant ». Par aqua-liant, on entend un produit composé d'eau, d'élastomères naturels et de nanoparticules minérales.

La composition GAS selon l'invention pourra être mise en oeuvre à chaud ou à froid selon les techniques connues de l'homme du métier.

Par exemple, elle pourra être préparée à chaud dans une centrale d'enrobage continue ou discontinue.

Le procédé peut présenter les étapes suivantes :
(i) le chauffage du liant hydrocarboné tel que défini ci-dessus à une température supérieure ou égale à 110°C, de préférence allant de 120 à 170°C,
(ii) le pré-dosage des différentes fractions granulaires 0/d, d'/D' et d/D entrant dans la formulation de la composition GAS selon l'invention, par exemple dans des trémies doseuses ;
(iii) éventuellement, le séchage et le dépoussiérage des différentes fractions granulaires, par exemple dans des sécheurs constitués d'un tube cylindrique tournant sur lui-même et équipé d'un brûleur au fuel ou au gaz apte à chauffer les fractions granulaires à des températures de l'ordre de 120 à 170°C, de préférence de 150 à 170°C ;
(iv) le malaxage des fractions granulaires éventuellement séchées avec le liant hydrocarboné chaud, en général dans un malaxeur ou dans un tambour sécheur.

La présente invention porte également sur un revêtement routier comprenant le matériau tel que décrit ci-dessous.

Sur une surface de coupe de la Grave Agglomérée Scellée, les granulats de la première fraction granulaire (10/D) peuvent représenter plus de 35% de la surface, de manière préférée plus de 40% de la surface et en particulier de 40 à 60% de la surface de coupe.

En particulier, la composition GAS est une monocouche d'assise dudit revêtement et présente une épaisseur de 8 à 20 cm formant à la fois la couche de base et la couche de fondation dudit revêtement.

En règle générale, pour des enrobés bitumineux classiques, la règle d'application entre épaisseur nominale (e) de la couche de base ou de la couche de fondation et la dimension maximale du mélange D granulaire est la suivante : e mini= 4 * D.

En appliquant cette règle, on retrouve :
4 * 10 mm = 4 cm d'épaisseur en tous points pour les enrobés 0/10 mm,
4 * 14 mm = 6 cm d'épaisseur en tous points pour les enrobés 0/14 mm,
4 * 20 mm = 8 cm d'épaisseur en tous points pour les enrobés 0/20 mm.

A priori, pour la composition GAS selon l'invention, on devrait avoir : 4*31,5 mm = 12,6 cm d'épaisseur en tous points pour des formules 0/31,5 mm et 16 cm d'épaisseur en tous points pour des formules 0/40 mm, ce qui rendrait l'invention peu encline aux usages les plus courants (couches d'épaisseur unitaire comprise entre 8 et 12 cm pour chaque couche de base et chaque couche de fondation ou pour une monocouche d'assise de même gamme d'épaisseur sous trafic plus faible).

De ce fait, la Demanderesse a découvert que la GAS selon l'invention pouvait s'appliquer non seulement en une seule application sur une épaisseur courante comprise entre 8 et 13 cm, y compris pour des formules 0/40 mm, mais en sus, en monocouche pouvant atteindre 16 à 20 cm, permettant au passage d'économiser la couche d'accrochage normalement nécessaire entre deux applications successives. En effet, pour des GB ou EME 0/14 mm, l'épaisseur maximale d'application en configuration monocouche n'excède pas 13 cm. Elle atteint 15 cm pour les GB ou EME 0/20 mm. Dans ce dernier cas, la compacité requise de l'enrobé pose davantage de problèmes pour être atteinte.

Dans le cas de la composition GAS objet de la présente invention, il en est autrement, puisque les compacités sont d'autant plus fortes et homogènes que l'épaisseur de la monocouche est forte.

La composition GAS selon l'invention bouscule ainsi les règles établies en matière de mise en oeuvre en permettant une facilité d'application (une couche au lieu de deux) pour au moins un même niveau de performance mécanique que les GB et que certains EME.

En général, la composition GAS sera revêtue d'une couche de liaison, elle-même revêtue d'une couche de roulement, formant la couche de surface du revêtement routier.

Le revêtement routier est généralement obtenu par :
- répandage de la composition GAS obtenue à l'issu de l'étape (iv) ci-dessus ;
- puis de son compactage (mécanique, etc) et
- de son refroidissement.

Les étapes ci-dessus sont connues de l'homme du métier et ne seront pas plus détaillée ci-après.

En particulier, le revêtement routier présente une résistance à la fatigue à 1 million de cycles mesurée selon la norme NF EN 12 697-24 (EPS6) supérieure ou égale à 85 µdéf, de préférence allant de 85 à 140 µdéf, en particulier de 100 à 130 µdéf et plus particulièrement de 100 à 115 µdéf.

Il présente notamment un module complexe de rigidité mesurée selon la norme NF EN 12697-26 supérieur ou égal à 11000 MPa, de préférence supérieur ou égal à 12000 MPa et allant en particulier de 11000 à 16 000 MPa et typiquement de 11 000 à 14 000 MPa.

Ainsi, la composition GAS selon l'invention présente les avantages suivants :
- la valorisation de granulats subnormaux, tels que les ballasts SNCF ou des graviers de Béton Concassé, l'emploi d'une forte proportion de granulats grenus de dimension supérieure à 10 mm, voire 20 mm présentant une grande dureté conférant une grande résistance mécanique à l'enrobé ; en outre, la répartition des gros granulats dans le mélange granulaire conditionne significativement le résultat à l'essai de fatigue, inversement à ce que prétend la technique française actuelle des enrobés pour laquelle le liant constitue le vecteur largement prépondérant du résultat final ; enfin, le cheminement des fissures épouse les parois de ces gros granulats sans parvenir le plus souvent à les traverser - le blocage de la fissure de fatigue contre ceux-ci conduit au développement d'une seconde fissure contrainte également à l'évitement conduisant à un retardement de la fissuration et ainsi à une forte résistance en fatigue de l'enrobé selon l'invention. Ce phénomène significatif compense la faiblesse de la teneur en liant eu égard aux performances équivalentes obtenues sur d'autres mélanges conventionnels bien plus largement dosés en liant bitumineux.
- l'emploi d'une faible teneur en liant hydrocarboné, tel qu'un liant bitumineux par rapport aux GB et aux EME, ce qui la rend plus économique ;
- sans qu'il soit nécessaire d'avoir recours à des bitumes de grade dur, tels que 10/20, 15/25 voire 20/30 ;
- tout en présentant d'excellentes performances mécaniques (équivalentes à celles obtenues avec une GB4 ou structurellement proches voire équivalentes à un EME2 normalisé : module complexe ou en compression diamétrale qui est supérieur ou égal à 11 000 MPa, de préférence supérieur ou égal à 12 000 MPa ; une résistance à la fatigue à 1 million de cycles avec EPS6 ≥ 100 µdéf, de préférence proche ou supérieure à 110µdéf, une compacité *in situ* ≥ 92%, de préférence ≥ 94% et idéalement ≥ 96% et une résistance aux déformations permanentes (orniérage) : ≤ 7,5% à 30000 cycles) ;
- l'application d'une monocouche de la composition GAS selon l'invention afin de former une couche d'assise monolithique en lieu et place de deux couches individualisées et artificiellement assemblées (couches de base et couche de fondation), comme c'est le cas avec les GB et les EME ;
- un compromis entre la maniabilité (évolution du pourcentage du vide), la compacité, l'adhésivité, la rugosité, et surtout la résistance à l'orniérage.

Les exemples suivants, non limitatifs, illustrent la présente invention. Dans les exemples suivants, à moins qu'il ne soit indiqué une mesure différente, les valeurs sont exprimées en masse.

### Exemples

### Exemple 1 : Exemple de formulation en laboratoire d'une composition GAS selon l'invention

Une composition GAS selon l'invention, dont la formulation est illustrée au tableau 1 a été confectionnée à chaud dans un malaxeur thermo-régulé. Le bitume a été chauffé à une température de 150 °C, les granulats ont été préalablement pré-dosés dans des bacs et chauffés à 150°C avant d'être introduits avec le bitume chauffé dans un malaxeur pendant 5 minutes. L'enrobé a ensuite été pesé dans un moule cylindrique de dimensions appropriées avant d'être compacté à l'aide de la presse à cisaillement giratoire.

**Tableau 1**

| **Composés** | **Pourcentage (%) en masse** |
|---|---|
| Ballast SNCF recyclés 20-40 mm | 34 |
| Gravillons roche massive concassée 10/14 mm | 24 |
| Sable roche massive concassée 0/4 mm | 8,4 |
| A.E | 30 |
| Bitume de grade 50/70 | 3,6 |

Le mode de compactage du cylindre de l'exemple 1 a été réalisé à l'aide d'une presse à cisaillement giratoire, avec un moule de 160 mm de diamètre, et une hauteur, correspondante à une teneur en vide égale à 0, de 150 mm : une fois placé, foisonné et à la température d'essai (130°C à 160°C environ) dans le moule cylindrique.

Il a été appliqué, sur le sommet du moule, une pression verticale de 0,6 MPa ; en même temps, le moule est incliné d'un angle faible de l'ordre de 1° (externe) ou 0,82° (interne) et soumis à un mouvement circulaire. Ces différentes actions exercent un compactage par pétrissage.

### Exemple 2 :

Le mode de compactage des plaques de composition GAS de l'exemple 1 dans le moule a été effectué selon une méthode d'essai interne à l'aide d'un bac de compactage muni de pneumatiques.

Des plaques de composition GAS ont été confectionnées aux dimensions suivantes : 180 mm de largeur, 600 mm de longueur et 150 mm de hauteur. Le compactage a été arrêté dès lors que la masse volumique visée a été atteinte.

### A) Evaluation du comportement de l'enrobé

### • Essai Duriez ou sensibilité à l'eau : pourcentage de vide/compacité (EN 12697-12)

Principe essai Duriez : le mélange est compacté dans un moule cylindrique par une pression statique à double effet. Une partie des éprouvettes est conservée sans immersion à température (18°C) et hygrométrie contrôlées, l'autre partie est conservée immergée. Chaque groupe d'éprouvettes est écrasé en compression simple.

Interprétation essai Duriez : le rapport de la résistance après immersion à la résistance à sec donne la tenue à l'eau du mélange. La résistance à sec est une approche des caractéristiques mécaniques, et la compacité constitue un indicateur complémentaire à l'essai de compactage à la PCG.

### • Essai de compactage à la PCG (EN 12697-31)

Principe de l'essai PCG : le mélange est contenu dans un moule cylindrique délimité par des pastilles et conservé à une température constante pendant toute la durée de l'essai ; le but étant de déterminer le pourcentage de vide d'une éprouvette par un nombre de girations donné.

Interprétation essai PCG : à l'issue du compactage et après refroidissement des corps d'épreuve, nous procédons à un sciage vertical central, afin d'évaluer de visu, l'harmonisation des gros éléments et de constater la nature des effets de bord et l'homogénéité du compactage.

### B) Carottage de l'enrobé obtenu à l'exemple 2 selon l'invention

Afin de déterminer le comportement en Module et en fatigue, de la composition GAS de l'exemple 1 à grande granularité incorporant du Ballast de récupération SNCF et des A.E, un carottage a été effectué de sorte à obtenir des éprouvettes de 50 mm d'épaisseur et 100 mm de diamètre.

Le carottage des éprouvettes a été effectué dans la partie centrale et latérale des plaques, afin d'avoir une bonne répartition des matériaux pour chaque corps d'épreuve, de minimiser l'effet du gradient de densité, et aussi, d'éviter leur fragilisation due aux effets de bords.

12 carottes ont ainsi été réalisées.

Les résultats sont regroupés dans le tableau 3 ci-dessous. Le pourcentage de vide (géométrique et aussi hydrostatique) permet de faire un premier ordonnancement des carottes. Comme on peut le constater, toutes les éprouvettes carottées -puis sciées-, ont des valeurs de vide assez proches, de l'ordre de 2,5 à 4,9%; de fait, aucune n'a été écartée par ce critère.

Par conséquent, la composition GAS selon l'invention présente un pourcentage de vide qui oscille entre 2,5 et 5% (niveau similaire à celui des EME2) et montre ainsi que le matériau selon l'invention présente une excellente compacité eu égard à sa granularité. Ceci démontre qu'il est très compact et apte à assurer un bon niveau d'imperméabilisation vis-à-vis du sol support sur lequel il est mis en oeuvre.

### • Module de rigidité (NF EN 12697-26 annexe C)

Le module de rigidité est calculé selon la norme NF EN 12697-26 annexe C.

**Tableau 2**

| **Eprouvette** | **Module d'élasticité E (MPa)** | **Charge** | **% vide s.s.s.** | **Compacité (%)** |
|---|---|---|---|---|
| 5 | 14710 | 1650 | 3.5 | 96,50 |
| 3 | 14046 | 700 | 2.5 | 97,50 |
| 1 | 13997 | 1500 | 2.8 | 97,20 |
| 11 | 13456 | 800 | 4.9 | 95,10 |
| 4 | 13021 | 1450 | 2.4 | 97,60 |
| 9 | 12998 | 850 | 3.4 | 96,60 |
| 8 | 12993 | 1350 | 4.9 | 95,10 |
| 6 | 12499 | 1000 | 4.3 | 95,70 |
| 2 | 12429 | 1200 | 4.3 | 95,70 |
| 10 | 12358 | 950 | 3.3 | 96,70 |
| 12 | 12232 | 1150 | 4.8 | 95,20 |
| 7 | 12036 | 1050 | 4.2 | 95,80 |

Cet essai montre que la composition GAS selon l'invention présente un module complexe ou en compression diamétrale qui est supérieur ou égal à 12 036 MPa, soit positionné en partie supérieure de la classe GB4 et à la limite de celui d'un EME2. Par ailleurs, les écarts entre les valeurs sont plutôt faibles et dans la limite de répétabilité des essais de module.

### • Essai de fatigue en compression diamétrale : ITFT (NF EN 12 697-24 annexe E)

L'essai de fatigue par traction indirecte, réalisé selon l'annexe E de la norme EN 12697-24, à 10°C, est utilisé pour classer les mélanges bitumineux selon leur résistance à la fatigue, en estimant la durée de vie du mélange sous contrainte constante, jusqu'à la rupture du corps d'épreuve.

La charge imposée pendant l'essai ITFT pour chaque éprouvette est choisie arbitrairement à partir des résultats du module de rigidité, classés dans le tableau 2. Les résultats des trois premiers essais nous permettent un réajustement des charges consignées au départ, afin d'améliorer la répétabilité des essais de fatigue. Une première répartition des éprouvettes a été réalisée en les classant dans un ordre décroissant selon les modules (tableau 2). Les contraintes d'application ont été réparties de façons alternées (haute, faible, haute, faible...), afin d'avoir une distribution centrée.

Les résultats d'essai de fatigue par traction indirecte sont regroupés dans le tableau 3

**Tableau 3**

| **Éprouvettes** | **Diamètre (mm)** | **Hauteur (mm)** | **Contrainte de chargement (kPa)** | **Déformation initiale totale (µε₀)** | **Nombre de cycles de chargement Nf** | **Déf. résiliante (µε0)** | **Nombre de cycle Energé-tique** |
|---|---|---|---|---|---|---|---|
| 1 | 100 | 52.2 | 1650 | 235 | 6000 | 178 | 5000 |
| 8 | 100 | 50.3 | 1350 | 209 | 18000 | 158 | 12000 |
| 5 | 100 | 50.3 | 1650 | 198 | 9000 | 153 | 8000 |
| 6 | 100 | 50.4 | 1000 | 126 | 86000 | 107 | 60500 |
| 2 | 100 | 49.7 | 1200 | 163 | 15500 | 125 | 11500 |
| 9 | 100 | 50.0 | 800 | 94 | 823000 | 82 | 624500 |
| 12 | 100 | 50.7 | 1650 | 251 | 5500 | 185 | 4500 |
| 10 | 100 | 51.5 | 900 | 134 | 306500 | 111 | 245500 |
| 7 | 100 | 50.9 | 900 | 129 | 97000 | 103 | 63500 |
| 3 | 100 | 50.1 | 850 | 96 | 414500 | 80 | 333000 |
| 4 | 100 | 50.0 | 1450 | 189 | 26500 | 147 | 21500 |
| 11 | 100 | 50.5 | 1050 | 114 | 88500 | 101 | 64000 |

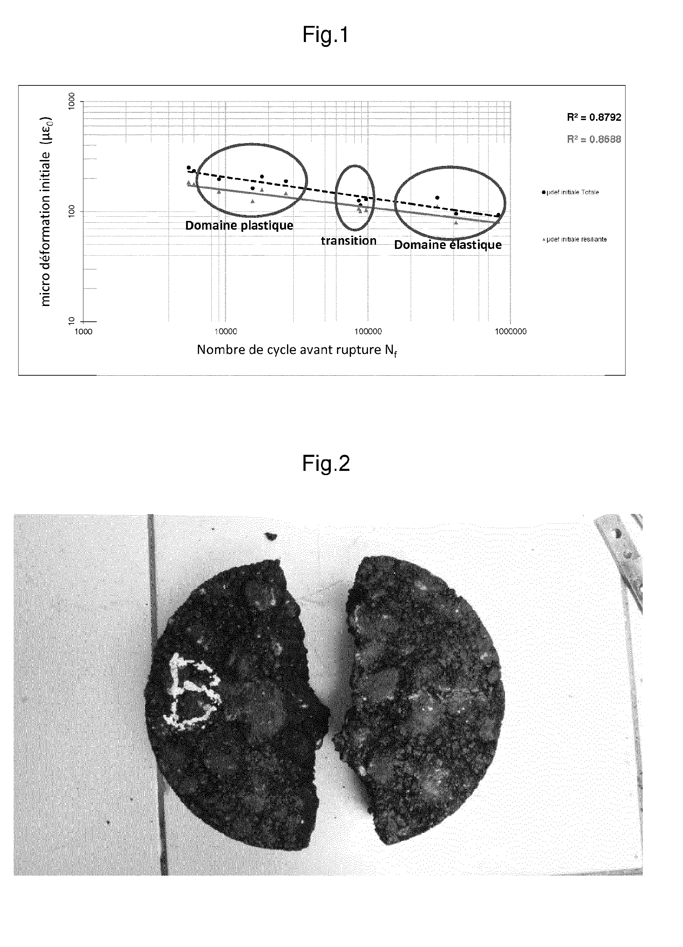

Les valeurs de déformation et de nombre de cycles de chargement, regroupées dans le tableau 3, permettent de représenter la déformation initiale en fonction du cycle de rupture, illustrées sur la figure1.

La valeur du nombre de cycle de rupture N_{f} suit la loi suivante : Nf = 10k * (1/ε₀)ⁿ avec :
Nf : nombre de cycle à la rupture,
ε₀ : déformation initiale en (µdef),
K et n : constantes calculées à partir de la pente et la droite à l'origine de la courbe.

En se référant à la figure 1, on constate que les déformations obtenues pour les douze éprouvettes forment trois zones. Une zone à haute déformation (cycles très courts), une zone à faible déformation (cycles très longs), et une zone de transition (cycles moyens).

Ainsi, la composition GAS selon l'invention, à forte proportion en ballast 0/40, a un comportement élasto-plastique, où :
- à haute contrainte, la déformation initiale est importante ; l'éprouvette est dans un domaine plastique.
- pour les faibles contraintes, la déformation est très petite ; l'éprouvette est dans un domaine élastique.

La distribution des résultats unitaires d'essai (chaque point du graphique) fait ainsi apparaitre un comportement caractéristique au mélange GAS : trois nuages de points bien distincts sont matérialisés et correspondent à des variations de comportement du matériau. Ce constat est surprenant, car pour l'ensemble des matériaux enrobés usuels, la distribution des points le long de la droite de fatigue est continue. Tel n'est pas le cas avec la GAS.

Par ailleurs, un intervalle de confiance a été déterminé afin de donner un champ d'acceptabilité de l'essai.

Pour cela, un classement d'éprouvettes selon les trois zones de déformation (plastique, élastique, transition) a été réalisé, puis les moyennes des déformations initiales ont été établies comme indiquées sur les tableaux 4 et 5 suivants :

**Tableau 4**

| **Eprouvette** | **Dia-mètre (mm)** | **Hauteur (mm)** | **Contrainte de chargement (kPa)** | **Déformation initiale totale (µε₀)** | **Nombre de cycles de chargement (Nf)** | **Moyenne sur déformation initiale totale** | **Nombre de cycle de rupture corres-pondant** | **Déf initiale totale corrigé** |
|---|---|---|---|---|---|---|---|---|
| 12 | 100 | 50.7 | 1650 | 251 | 5500 | | | 240 |
| 1 | 100 | 52.2 | 1650 | 235 | 6000 | | | 236 |
| 8 | 100 | 50.3 | 1350 | 209 | 18000 | 211 | 10177 | 187 |
| 5 | 100 | 50.3 | 1650 | 198 | 9000 | | | 217 |
| 2 | 100 | 49.7 | 1200 | 163 | 15500 | | | 193 |
| 11 | 100 | 50.5 | 1050 | 114 | 88500 | | | 134 |
| 7 | 100 | 50.9 | 900 | 129 | 97000 | 123 | 133972 | 132 |
| 6 | 100 | 50.4 | 1000 | 126 | 86000 | | | 135 |
| 3 | 100 | 50.1 | 850 | 96 | 414500 | | | 97 |
| 9 | 100 | 50.0 | 800 | 94 | 823000 | 108 | 249328 | 84 |
| 10 | 100 | 51.5 | 900 | 134 | 306500 | | | 103 |

**Tableau 5**

| **Eprouvette** | **Dia-mètre (mm)** | **Hauteur (mm)** | **Contrainte de chargement (kPa)** | **Déformation initiale totale (µε₀)** | **Nombre de cycles de chargement (Nf)** | **Définition résiliante à 100 cycles (µε0)** | **Moyenne sur déformation résiliante** | **Déf. résiliante corrigée** |
|---|---|---|---|---|---|---|---|---|
| 12 | 100 | 50.7 | 1650 | 251 | 5500 | 184,6 | | 179 |
| 1 | 100 | 52.2 | 1650 | 235 | 6000 | 177,9 | | 177 |
| 8 | 100 | 50.3 | 1350 | 209 | 18000 | 158,3 | 160 | 145 |
| 5 | 100 | 50.3 | 1650 | 198 | 9000 | 1520,6 | | 164 |
| 2 | 100 | 49.7 | 1200 | 163 | 15500 | 124,5 | | 149 |
| 11 | 100 | 50.5 | 1050 | 114 | 88500 | 101,0 | | 110 |
| 7 | 100 | 50.9 | 900 | 129 | 97000 | 103,0 | 104 | 108 |
| 6 | 100 | 50.4 | 1000 | 126 | 86000 | 106,5 | | 110 |
| 3 | 100 | 50.1 | 850 | 96 | 414500 | 79,7 | | 83 |
| 9 | 100 | 50.0 | 800 | 94 | 823000 | 82,0 | 91 | 74 |
| 10 | 100 | 51.5 | 900 | 134 | 306500 | 111,4 | | 88 |

A l'aide de l'équation ci-dessus, les déformations corrigées ont été calculées, et une nouvelle moyenne ainsi que le cycle de rupture correspondant ont été déterminés par zone. Enfin, l'écart type entre chacune des moyennes a été calculé.

Le nombre de cycles à la rupture suit la loi Nf = 10k * (1/ε₀)ⁿ. Nous avons alors déterminé n et k en recherchant la pente et l'ordonnée à l'origine de la courbe.

### - ITFT Totale

| **µε** | **Nf** |
|---|---|
| 134 | 91 453 |
| 113 | 200 000 |

k = 9,15 E+14
R²=0,8
n = -4,70

### - ITFT résiliante

| **µε** | **Nf** |
|---|---|
| 130 | 345 288 |
| 108 | 100 000 |

n = -5,55
k= 1,90 E +16
R²= 0,87

Ainsi, la déformation initiale totale acceptée à 200 000 cycles de la composition GAS de l'exemple 1 selon l'invention est de 113±9 µdéf.

En se référant aux figures 2 à 5, le comportement de la composition GAS selon l'invention va être décrit.

La figure 2 représente le comportement usuel d'un enrobé de granulométrie 0/14 mm à l'essai de fatigue en compression diamétrale. Comme on peut le constater, la figure 2 est caractérisée par un cheminement à peu près rectiligne de la fissure de fatigue, cette dernière traversant essentiellement du mastic (sable + filler + bitume) et contournant à peine les granulats, compte tenu de leurs dimensions. Ainsi, le mastic est proéminant dans la transmission de la fissure de fatigue. Les granulats sont trop « petits » pour s'opposer efficacement à la transmission des efforts de traction dans l'échantillon.

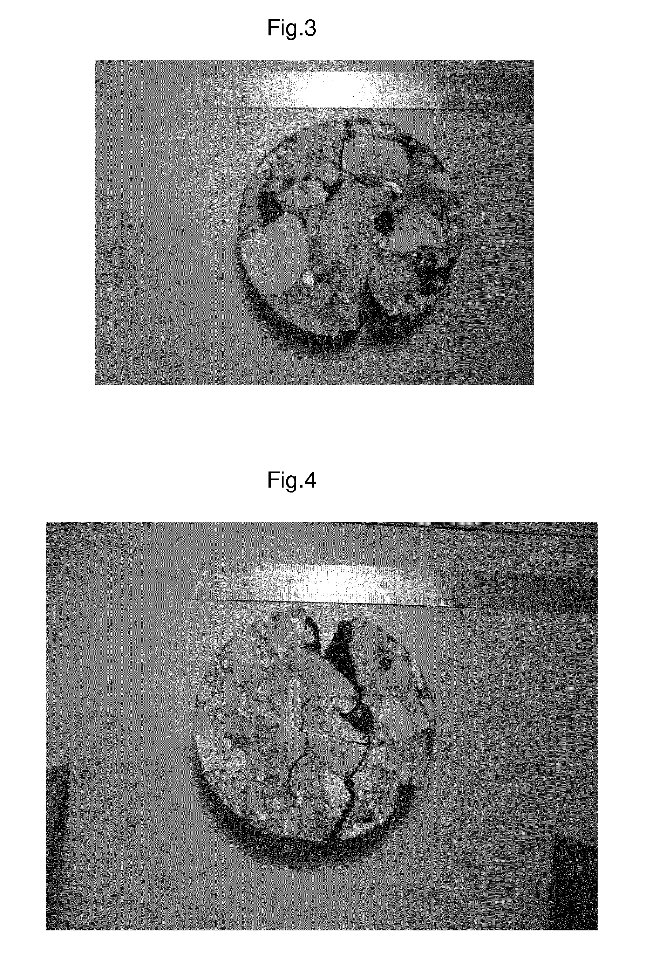

La figure 3 montre le comportement à l'essai de fatigue en compression diamétrale de la carotte 4 selon l'invention. Inversement au mélange précédent, la densité de graviers et gravillons ballasts de la composition GAS de l'exemple 1 est telle que la fissure de fatigue « peine » à trouver son cheminement. Elle est donc contrainte, soit d'éviter les plus gros granulats qui sont plus durs, soit à tenter de les contourner/traverser. Dans un tel cas, la résistance en fatigue de la composition GAS dépend en partie de la distribution et de la dureté des gros granulats qui la composent.

La figure 4 montre également le comportement à l'essai de fatigue en compression diamétrale de la carotte 7 selon l'invention. Dans le cas présent, une première fissure s'est développée depuis le bas de l'éprouvette, puis a été entravée par un gros granulat (au final expulsé en fin d'essai). Une seconde fissure est apparue au sein de l'éprouvette, mais n'a pas pu cheminer jusqu'à son sommet, entravée par un gros élément.

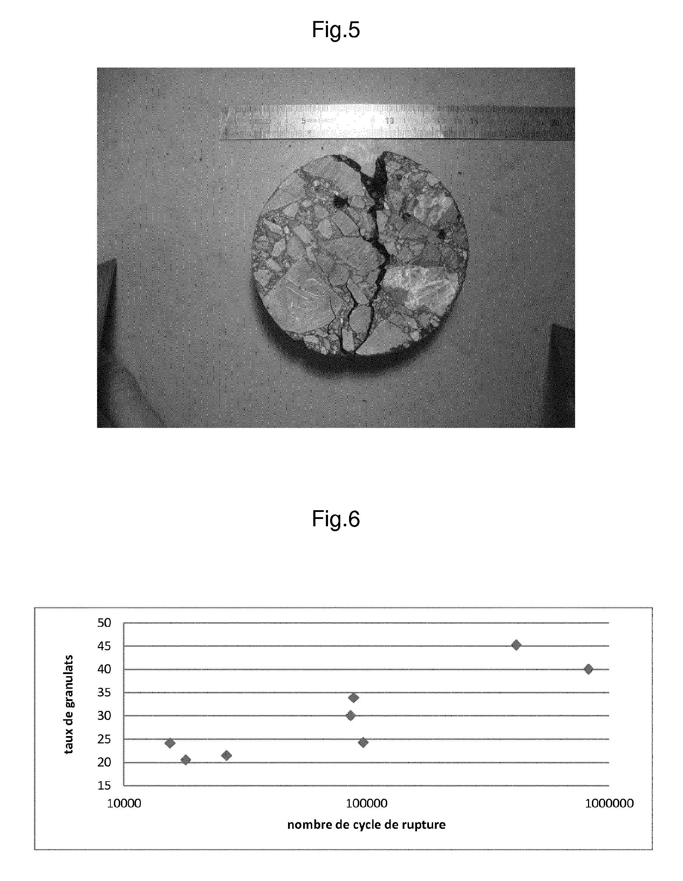

La figure 5 montre le comportement à l'essai de fatigue en compression diamétrale de la carotte 2 selon l'invention. Dans le cas présent, on constate une triple fissure. La principale à droite a buté contre un premier granulat (de taille intermédiaire proche de 10 mm) sans pouvoir se développer. Une amorce de fissure a été recréée à partir du bas de l'éprouvette, mais s'est perdue dans un gros granulat plus résistant que le précédent. Le premier granulat, de moindre qualité intrinsèque, a fini par céder. La troisième fissure au centre est une fissure liée au champ de contraintes variables entre la fissure 1 et la fissure 2.

Par conséquent, les figures 3 à 5 montrent que les granulats de gros diamètre (grande dimension), en particulier supérieur à 20 mm, empêchent la ou les fissures de se propager rapidement, ce qui permet un meilleur contrôle ou maîtrise de la fissuration. Ainsi, la durée de vie de la composition GAS selon l'invention est améliorée par rapport à un enrobé classique à un dosage en bitume du niveau de celui de l'invention (figure 2).

### • Granulomorphie

L'influence du ballast sur le comportement des corps d'épreuve pendant l'essai de fatigue par traction indirecte a également été déterminé.

A l'aide du logiciel *ImageJ,* il a été déterminé, pour chaque surface de rupture des éprouvettes susmentionnées, la proportion relative d'éléments minéraux de dimension supérieure ou égale à 10 mm et d'éléments plus fins, dont le mastic (sable + filler + bitume) se trouvant sur le plan de rupture. Ensuite, le pourcentage du ballast en fonction du cycle de rupture a été représenté.

Il a ainsi été trouvé que les carottes présentent différents taux de gros granulats (3 carottes comprennent entre 20 et 25 % en poids de gros granulats > 20m, 3 carottes comprennent entre 25 et 35 % en poids de gros granulats > 20m et 2 carottes comprennent entre 40 et 45 % en poids de gros granulats > 20m).

En se référant à la figure 6, on remarque que plus le nombre de gros granulats est grand et plus le nombre de cycles de rupture est élevé. On constate en outre les trois zones de déformation précédemment définies. Dans chaque zone, le pourcentage de granulats ayant influencé la rupture (figure 6) pour chaque éprouvette reste proche :
- Pour 20000 cycles entre 20 et 25 %.
- Pour 100000 cycles entre 25 et 35 %.
- Pour 700000 cycles entre 40 et 45 %.

On y constate que plus le pourcentage de gros éléments est important au droit de la surface de rupture et plus celle-ci est en mesure de supporter un nombre important de cycles de chargement.

Le cycle de rupture dépend fortement du taux de liant déposé sur la surface rompue ainsi que la répartition des gros éléments. Pour une faible contrainte, et pour un taux de liant faible, la déformation sera donc faible, d'autre part le cycle de rupture sera très grand. Inversement pour les hautes contraintes.

La déformation initiale totale pour chaque éprouvette est bien liée à la répartition granulaire et à la quantité du liant déposé sur le ballast. Plus la quantité du liant est élevée, plus la déformation sera élevée, plus l'endurance sera faible.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Composition Grave Agglomérée Scellée (GAS) comprenant au moins un liant hydrocarboné et un mélange granulaire, ledit mélange granulaire présentant la distribution granulométrique suivante, en masse, par rapport à la masse totale du mélange granulaire : de 45 à 90% du mélange granulaire présentent une dimension supérieure ou égale à 10 mm, avec au moins 25% qui présentent une dimension supérieure ou égale à 20 mm, **caractérisée en ce que** la teneur en vide en volume par rapport au volume total de la composition GAS mesurée selon la norme NF EN 12697 à 120 girations à la presse à cisaillement giratoire (PCG), est inférieure ou égale à 10%.

2. Composition GAS selon la revendication 1, dans laquelle moins de 25% (borne comprise), de préférence de 6 à 15%, en masse du mélange granulaire présente une dimension inférieure ou égale à 4 mm.

3. Composition GAS selon l'une des revendications 1 à 2, dans laquelle le mélange granulaire présentant une dimension supérieure ou égale à 10 mm présente un coefficient d'aplatissement faible de l'ordre de 0 à 20%, de préférence inférieur à 15% mesuré selon la norme NF EN 933-3/A1 sur les grilles à fentes 16, 20, 25 et 31,5 mm.

4. Composition GAS selon l'une des revendications précédentes, dans laquelle le liant hydrocarboné est choisi parmi un liant bitumineux, un liant végétal, un aqua liant ou un de leurs mélanges et représente en masse par rapport à la masse totale de la composition pour couche d'assise moins de 4,5%, de préférence de 3 à 4% et idéalement de 3 à 3,7%.

5. Composition GAS selon l'une des revendications précédentes, dans laquelle le liant hydrocarboné présente un grade de pénétrabilité à 25°C déterminé selon la norme EN 1426 de 10/20, 15/25, 20/30, 40/60, 35/50, 50/70, 70/100 1/10^{e} de mm ou un de leurs mélanges.

6. Composition GAS selon l'une des revendications précédentes, dans laquelle le mélange granulaire comprend des granulats recyclés.

7. Composition GAS selon la revendication 6, dans laquelle au moins une partie du mélange granulaire présentant une dimension supérieure ou égale à 10 mm sont des granulats recyclés.

8. Composition GAS selon l'une des revendications 6 ou 7, dans laquelle le mélange granulaire présentant une dimension inférieure ou égale à 10 mm comprend 0 à 50% en masse par rapport à la masse totale de cette fraction, d'agrégats d'enrobés.

9. Composition GAS selon l'une des revendications 6 à 8, dans laquelle de 10 à 50% en masse du mélange granulaire par rapport à la masse totale du mélange granulaire sont des agrégats d'enrobés (AE).

10. Revêtement routier comprenant la composition GAS selon l'une des revendications 1 à 9.

11. Revêtement routier selon la revendication 10, dans lequel ladite composition GAS est une monocouche d'assise présentant une épaisseur de 8 à 20 cm formant à la fois la couche de base et la couche de fondation dudit revêtement.

12. Revêtement routier selon l'une des revendications 10 à 11, dans lequel ladite composition GAS est revêtue d'une couche de liaison, elle-même revêtue d'une couche de roulement, formant la couche de surface du revêtement routier.

13. Revêtement routier selon l'une des revendications 10 à 12, dans lequel sur une surface de coupe de ladite composition GAS, les granulats de la première fraction granulaire représentent plus de 35% de la surface, de manière préférée plus de 40% de la surface et en particulier de 40 à 60% de la surface de coupe.

14. Revêtement routier selon l'une des revendications 10 à 13, **caractérisé en ce qu'**il présente une résistance à la fatigue à 1 million de cycles mesurée selon la norme NF EN 12697-24 (EPS6) supérieure ou égale à 85 µdéf, de préférence allant de 85 à 140 µdéf, en particulier de 100 à 130 µdéf et plus particulièrement de 100 à 115 µdéf.

15. Revêtement routier selon l'une des revendications 10 à 14, **caractérisé en ce qu'**il présente un module complexe de rigidité mesurée selon la norme NF EN 12697-26 supérieur ou égal à 11000 MPa, de préférence supérieur ou égal à 12000 MPa et allant en particulier de 11000 à 16 000 MPa.
